Europäisches Patentamt

European Patent Office

Office européen des brevets

(11) Publication number: **0 194 304**
**B1**

# EUROPEAN PATENT SPECIFICATION

(45) Date of publication of patent specification: **09.01.91**   (51) Int. Cl.⁵: **H 01 R 9/16**

(21) Application number: **85904738.3**

(22) Date of filing: **13.09.85**

(86) International application number:
**PCT/US85/01757**

(87) International publication number:
**WO 86/01942 27.03.86 Gazette 86/07**

(54) **ELECTRICAL DISTRIBUTION SYSTEM HAVING SPECIALLY FORMED AND INSULATED BUS BARS.**

(30) Priority: **13.09.84 US 650376**

(43) Date of publication of application:
**17.09.86 Bulletin 86/38**

(45) Publication of the grant of the patent:
**09.01.91 Bulletin 91/02**

(84) Designated Contracting States:
**DE FR GB IT SE**

(56) References cited:
**US-A-2 960 674**
**US-A-3 183 299**
**US-A-3 488 621**
**US-A-3 566 331**
**US-A-3 909 098**
**US-A-3 922 053**

(73) Proprietor: **SQUARE D COMPANY**
**Executive Plaza**
**Palatine, IL 60067 (US)**

(72) Inventor: **SLICER, Allan, E.**
**R. R. 1, Box 242**
**Brookville, IN 47012 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to an electrical distribution system, and more particularly to an improved busway system having sections of both feeder busway and plug-in busway having specially formed and insulated bus bars.

The present invention represents an improvement over the electrical distribution systems disclosed in US—A—3,566,331 issued February 23, 1971 as well as US—A—3,384,855, issued May 21, 1968, to which reference may be had for description of common features and applications. Other features and applications of the distribution system may be further understood by reference to US—A—3,187,086, issued June 1, 1965, reissued as US—A—26,310 on November 28, 1967, as well as US—A—3,909,098, issued September 30, 1975.

Other plug-in type busway devices are known from US—A—3,183,299, US—A—3,488,621 and US—A—3,922,053, without, however, applicants protective structure.

US—A—3,922,053 discloses a plug-in bus duct having bus bars positioned in side-by-side relation, wherein the bus bars are only separated from one another by insulation except at a plug-in section wherein the bus bars are laterally spaced a distance one from the other. A take off point is located at the plug-in section to provide access to the bus bars for installation of a plug unit to tap off power.

In particular, the invention provides a plug-in busway section having opposite ends adapted for splice connection to an adjacent busway section, said plug-in busway section comprising: a housing including a pair of opposite side rails, an upper section ground bus and a lower section ground bus connected to said side rails intermediate said side rails, said housing having a plurality of plug-in openings longitudinally located along the length of said housing: a plurality of bus bars stacked between said upper and lower ground bus, and insulating means for said bus bars, said bus bars are closely sandwiched together having opposite ends and a plurality of humps comprised of bridging portions and adjoin transition portions intermediate said ends, said bus bars associated in stacked relationship between said plug-in openings and said opposite ends and arranged in spaced apart relationship at each of said plug-in openings to facilitate tap-off connection therefrom, characterized in that said opposite ends include a flared portion and are arranged in spaced apart relationship to facilitate splice connection, said plurality of bus bars include pairs of bus bars being identically formed and positioned in mirror image relationship with each other, and said insulating means comprising a plurality of insulating tubes wrapped around each bus bar, each tube including opposite ends, with adjacent tubes on each bus bar spaced apart at the bridging portion of the bus bar and extending over the adjacent transition portion, hump insulator strips respectively extending longitudinally along each hump portion of each bus bar on the top and bottom portions, said tubes being provided with notched out segments in overlying relationship with the lateral edges of said transition portions of said bus bars, and a plurality of hump edge insulators covering the edge of said bus bars exposed through said notched out segments.

It has been found desirable to envelope or surround the main phase bus bars of the system with a ground bus. A generally U-shaped upper section of the ground bus receives a generally U-shaped lower section of the ground bus with the main phase bus bars captured between the two sections of ground bus. The ground bus, together with a pair of side rails form a housing for the main phase bus bars. Multiple fasteners extend along the length of the busway section on each side, connecting the side rail to both the upper and lower sections of the ground bus and thereby securing the main phase bus bars within the envelope formed by the ground bus sections and also decreasing the electrical ground resistance. This particular housing construction also facilitates heat dissipation from the specially formed and insulated main bus bars. The bus bar formation require minimum space for confining while permitting splice connection between sections of busway and tap-off connection from the plug-in sections.

The specially formed insulated bus bars are sandwiched in back-to-back engagement with each other along sections of busway where no connections will be made, while they are spaced apart where tap-off or other connection may be made. Humps are provided in the main phase bus bars at the locations of the plug-in openings.

It is an object of the present invention to provide an improved electrical distribution system of economic construction.

It is a further object of this invention to incorporate insulated bus bars in back to back association which include humps and offsets that space the bars apart at tap off and splice connection locations.

It is a further object of this invention to provide versatile components which may be used in several applications.

It is a further object of this invention to provide suitable insulation for bus bars which have humps at tap off locations and offset connecting portions where splice connections will be made between busway sections.

Figure 1 is a perspective view showing connected feeder and plug-in sections of busway in accordance with the present invention.

Figure 2 is a perspective view showing the ground bus in accordance with the instant invention.

Figure 3 is a cross-sectional view showing the housing enclosing the main phase bus bars in accordance with the present invention.

Figure 4 is a cross-sectional view as shown in Figure 3 incorporating an alternate method of fastening.

Figure 5 is a partial side view showing an end of a section of busway in accordance with the present invention.

Figure 6 is a perspective view showing an insulated bus bar in accordance with the present invention.

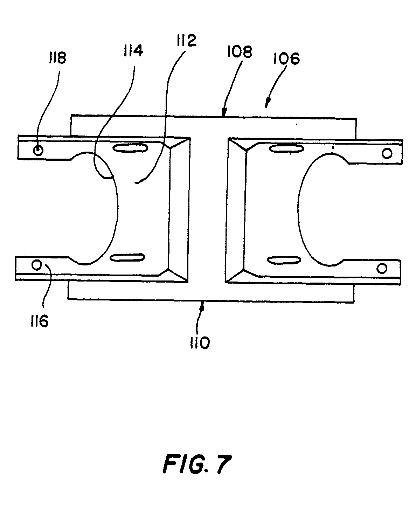

Figure 7 is a side view of a tie channel used to tie adjoining sections of the busway as shown in Figure 1 together.

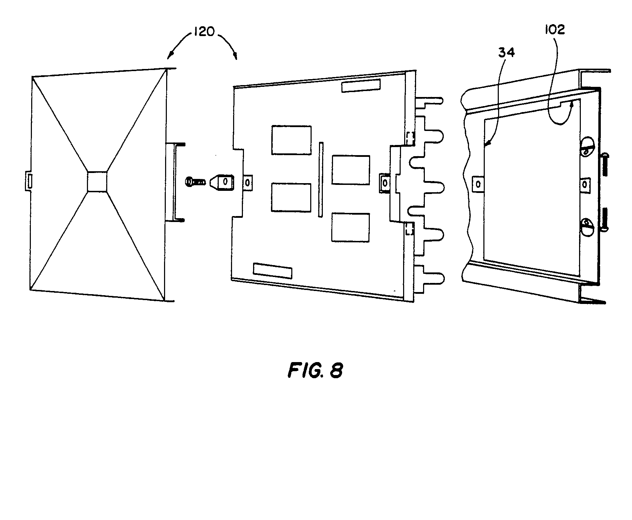

Figure 8 is an exploded perspective view showing a plug-in base assembly and side rail of the present invention.

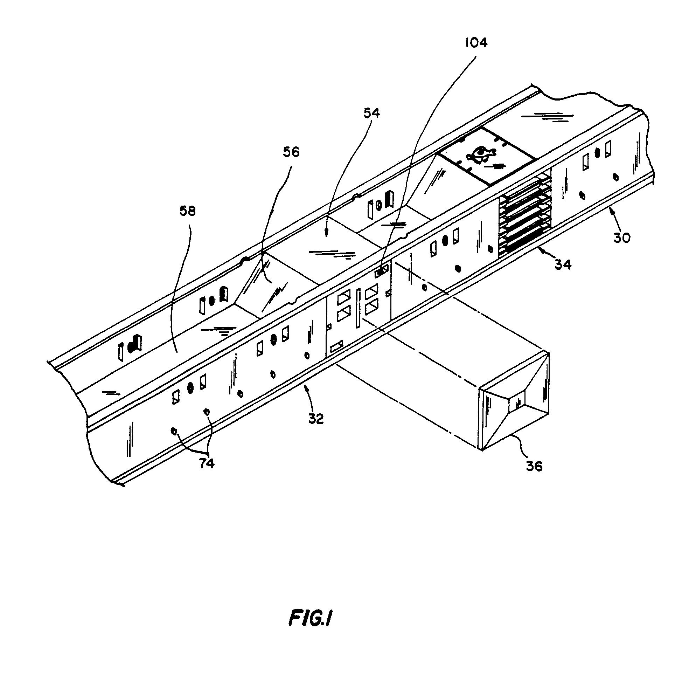

The electrical distribution system of the present invention is described with respect to both feeder sections of bus bars generally identified as 30 in Fig. 1 of the drawings and plug-in sections of bus bars identified generally by reference character 32. The present design is intended for busway systems carrying from 800A through 5000A, although it is not necessarily restricted to such applications. The current carrying capacity of the busway is dependent upon the size and material of the individual bus bars as well as the number of runs of bus bars within a busway section. The '855 patent discloses both single and double runs of bus bars. The plug-in sections are provided with plug-in openings 34 at various locations along its length as discussed, for example, in the previously referred to '331 Patent. The plug-in openings facilitate the tap-off of current from those locations and are covered by a swingable door 36 when the opening is not being used. The bus bars are carried between a pair of side rails 38 which will later be further described.

The main phase bus bars 40 of the instant invention are appropriately insulated and are carried in stacked back to back relationship except where physical separation of the bus bars 40 is required to facilitate a splice connection between sections of busway or at the tap off locations of the plug-in busway. At those locations where connections may be made, the bus bars are spaced apart to provide sufficient clearance between bars for connections.

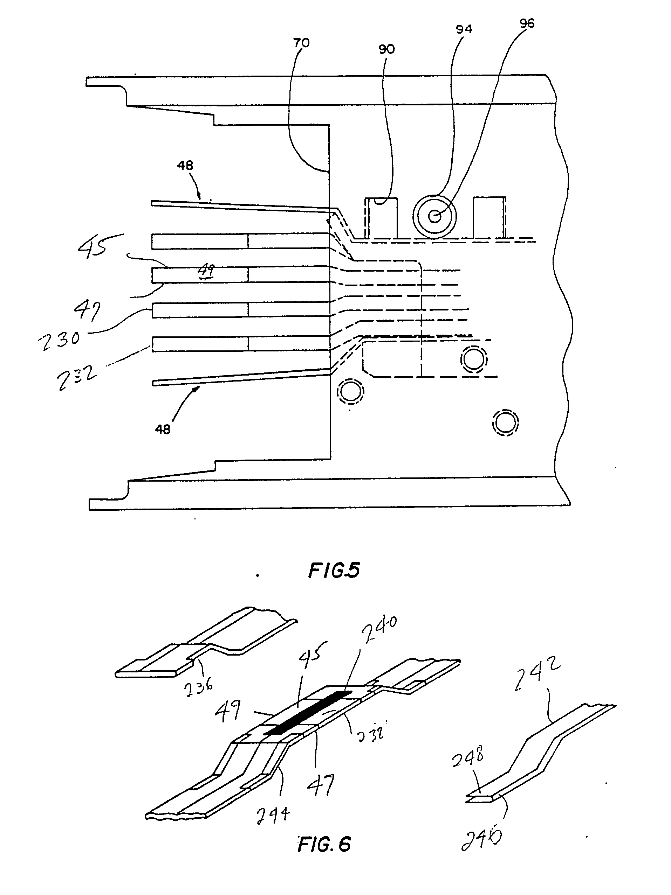

The bus bars in the feeder sections of busway include a flared portion 48 at each end while the plug-in sections of busway, in addition to the same flared end portion also include humps 54 in the bus bars at each plug-in location. Figure 5 shows the flared end portions of bus bars in a four-pole section of busway.

In both the feeder and plug-in sections, the two inner bus bars 230 are identically formed and are interchangable by rotating the bars 180°, the only difference then being the direction of the humps and flared end portions in the busway section. Similarly the two outer bus bars 232 are interchangeable and positioned in mirror image relationship.

As an example, a 3 meter (10 foot section) of busway could use bus bars formed from blank tin plated rawstock aluminum with the following dimensions: Outer bars-initial length 3004.5 mm (120.18 inches), formed with flared end portions and humps raised 15.9 mm (.636 inches). The center of the flared end portion 48 spaced 276.25 mm (11.05 inches) from the end of the bar and intermediate humps 54 having centers spaced apart by 600 mm (24 inches), each hump having a straight length of 150 mm (6 inches) while the flared end portions each extend approximately 60 mm (2.4 inches). Inner bars 230—initial length 2956.25 mm (118.25 inches), formed with flared end portions 48 and humps 54 raised 5.425 mm (.217 inches), with spacing and lengths of the humps and flared end portions the same as on the outer bars. The transitions to form the humps and flared end portions are made at approximately 45° for all bars.

The bus bars, each of which has a top portion 45, a bottom portion 47 and opposite edges 49, are then insulated as shown in Figure 6 to permit tap-off and splice connections where necessary.

Insulating tubes composed of one layer of varnished glass cloth between two layers of polyethylene terephthalate are placed around each bus bar for electrical insulation. The tubes are provided with notched out segments 236 which overlie the edge of the bus bar at the transition portion of the humps. The tubes are spaced apart from each other on each bar to provide a tap-off contact surface 238 on each hump. The overlap of the tube is provided on the side toward which the bar is humped.

A hump insulator 240, which may be a strip of .375 mm (.015) varnished glass type is placed longitudinally along the length of the bus bar on the top and bottom of the hump between the opposing plug-in bases or between the plug-in base and the bus bar brace assembly on multi sandwich sections of busway.

A hump edge insulator 242 formed from a polypropylene material is placed on the edge of the plug-in bars at the hump, covering the portion of the bus bar 244 which is exposed through the notches in the tubes. The edge insulator is generally U-shaped with a rounded base 246 and extending legs 248. The legs each extend approximately 25 mm (1 inch) and resiliently clasp the top and bottom surface of the bus bar while the base is provided with several ribs (not shown) which extend generally perpendicular to the direction of the insulated bus bar. The edge insulators are formed to conform with the particular edge that is engaged. Opposite diagonal edge insulators are identical which requires only two different edge insulators to properly fit each bus bar.

Any Underwriters Laboratory (UL) recognized electrical insulating tape rated 105 C or higher and having minimum thickness of .1875 mm (.0075 inches) is wrapped around the bus bar at the end joints.

The insulated main phase bus bars 40 are enveloped by a ground bus 42 which includes an upper section 44 and a lower section 46. The upper section includes a top portion 44a with opposite side flanges 46a extending toward the lower section. The lower section includes a bottom portion 46a with similarly extending side flanges 46b, although the lower side flanges are substantially shorter than the upper side flanges. The lower section 46 is positioned between the flanges 44b of the upper section, such that the two pairs of flanges are substantially aligned at the bottom edge thereof, with the main phase bus bars 40 sandwiched between the top portion of the upper section and the bottom portion of the lower section while also being located between the side flanges of the upper section.

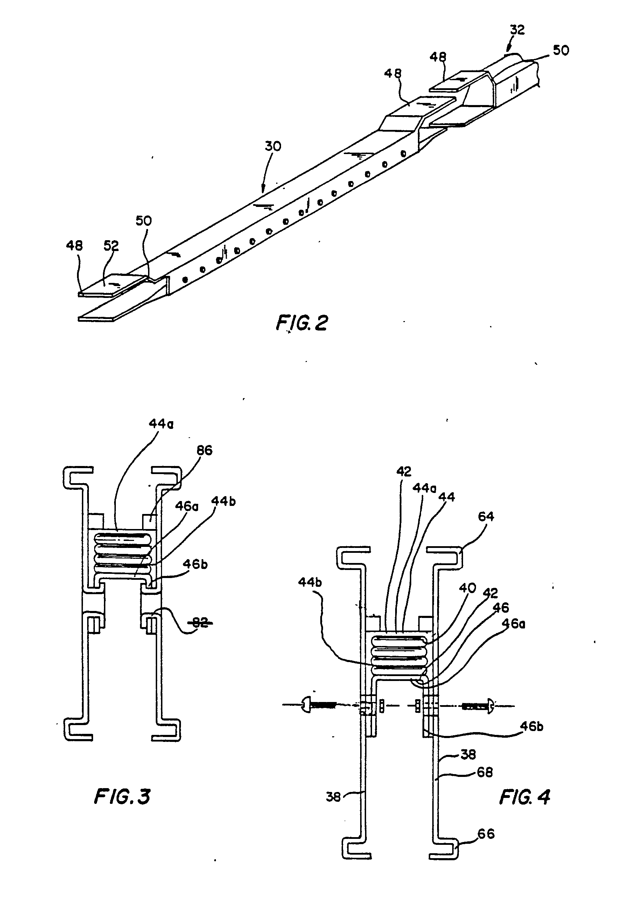

On both the plug-in sections 32 and feeder sections 30, the ground bus includes a flared end portion 48 to accommodate the separation between bus bars required for splice connection between sections. The flared end portion 48 as shown in Figures 2 and 5 includes an inclined section 50 and an extending connecting portion 52 on both the upper and lower sections of the ground bus. The flared formation facilitates drainage of water which may fall on the joint area. The plug-in sections of busway include humped portions 54 on both the upper and lower sections of ground bus corresponding to the plug-in opening 34 locations along the length of the busway where humps are provided in the bus bars as previously described. Each humped portion 54 of the ground bus includes opposite inclined top transition portions 56 and a bridging top portion 58 integrally connecting the two inclined top transition portions as well as opposite inclined bottom transition portions and a bridging bottom portion integrally connecting the two inclined bottom transition portions. Plug-in openings are also provided in the ground bus at the plug-in locations.

The ground bus 42, together with the pair of opposite side rails 38 form a housing for the main phase bus bars. The opposing side rails each include a top channel 64, a bottom channel 66 and an inwardly recessed main side portion 68 intermediate the top and bottom channels. The rails are positioned such that the top and bottom channels are inwardly directed. At the end of each busway section, a cutout 70 is provided in the main side portion of each rail where the bus bars are offered to facilitate connection between portions and removal of a connection joint which is more fully described in EP—A—0 195 046, Whitney filed concurrently herewith.

At various locations along the length of the housing the side rails 38 are fastened to the upper and lower ground bus sections, 44 and 46, respectively, as more fully explained in EP—A—0 192 763 filed concurrently herewith. As referred to previously, the plug-in sections of busway are provided with plug-in openings 34 in the main side portions 68 of the side rails at selected locations at which points the bus bars are spaced apart to facilitate tap-off connections. The plug-in openings of the opposite side rails are provided at the same location along the length of the bus bars contained therein, i.e., the openings on one side rails are in registration with the openings on the opposite side rail. The opening is generally rectangular in shape and includes an offset notch 102 at the upper right corner to facilitate ground connections.

A ground clip 104 is fastened to the top portion of the ground bus by a fastener. Additional holes may be provided above the plug-in opening on the main side portion between the opening and the top channel to facilitate the riveted connection of the side rails to the upper section of the ground bus, if believed desirable.

A joint tie channel 106 is provided to help secure adjoining sections of busway together. The tie channel 106 is substantially U-shaped with a top flange 108 and a bottom flange 110 which overlie the respective top and bottom channels 64 and 66 of the side rails 38 of adjoining sections of busway. A recessed securing portion 112 is provided at each end of the symmetrical tie channel which forms top and bottom segments of receiving channels at each end of the tie channel that receives respective portions of the channels provided on the side rails.

A generally mushroom-shaped cutout 114 is provided on each securing portion forming securing legs 116 which extend outward on each end of the tie channel 106.

Additional holes 118 are formed in the securing portion which facilitate connection of the tie channel to the side rails of the adjoining sections of busway.

Each plug-in opening 34 is associated with a swingable door 36 and a plug-in base assembly 120 which are more fully disclosed in EP—A—0 195 067 filed concurrently herewith.

The connecting joint 112 which is somewhat similar to the type shown in US—Patent No. 3,384,854 is provided to facilitate the connection between sections of busway and can be used to connect a feeder section to another feeder section or to a plug-in section. This connecting joint which has been previously referred to provides the splice connection between flanged end portions of adjoining sections of busway.

**Claims**

1. A plug-in busway section (32) having opposite ends advapted for splice connection to an adjacent busway section (32), said plug-in busway section (32) comprising: a housing including a pair of opposite side rails (38), an upper section ground bus (44) and a lower section ground bus (46) connected to said side rails (38) intermediate said side rails (38), said housing having a plurality of plug-in openings (34) longitudinally located along the length of said housing: a plurality of bus bars (40) stacked between said upper and lower ground bus (44, 46), and insulating means (240, 242) for said bus bars (40), said bus bars (40) are closely sandwiched together having opposite ends and a plurality of hump (54) comprised of bridging portions (58) and adjoin transition portions (56) intermediate said ends, said bus bars (40) associated in stacked relationship between said plug-in openings (34) and said opposite ends and arranged in spaced apart relationship at each of said plug-in openings (34) to facilitate tap-off connection therefrom, characterized in that said opposite ends include a flared portion (48) and are arranged in spaced apart relationship to facilitate splice connection, said plurality of bus bars (40) include pairs of bus bars (40) being identically formed and positioned in mirror image relationship with each other, and said insulating means (240, 242) comprising a plurality of insulating tubes wrapped around each bus bar (40), each tube including opposite ends, with adjacent tubes on each bus bar (40) spaced apart at the bridging portion (58) of the bus bar (40) and extending over the adjacent transition portion (56), hump insulator strips (240) respectively extending longitudinally along each hump portion (54) of each bus bar on the top (45) and bottom portions (47), said tubes being provided with notched out segments (236) in overlying relationship with the lateral edges (244) of said transition portions (56) of said bus bars (40), and a plurality of hump edge insulators (242) covering the edges (244) of said bus bars (40) exposed through said notched out segments (236).

2. A plug-in busway section (32) as claimed in claim 1, characterized in that each said edge insulator (242) is generally U-shaped with a rounded base (246) and extending resilient legs (248).

3. A plug-in busway section (32) as claimed in claim 2, characterized in that each said edge insulator (242) is formed to be received over a respective edge of said bus bars (40).

4. A plug-in busway section (32) as claimed in claim 1, characterized in that said insulating tubes comprise one layer of varnished glass cloth between two layers of polyethylene terephthalate.

5. A plug-in busway section (32) as claimed in claim 1, characterized in that said edge insulator (242) is formed from a polypropylene material.

6. A plug-in busway section (32) as claimed in any previous claim, characterized in that each hump (54) carries four edge insulators (242) with diagonally opposite edge insulators (242) being interchangeable.

**Patentansprüche**

1. Steckbarer Schienenverteilerabschnitt (32) mit einander entgegengesetzten Enden, die zum Spleißen mit einem benachbarten Schienenverteilerabschnitt (32) geeignet sind, wobei der steckbare Schienenverteilerabschnitt (32) ein Gehäuse aufweist, das zwei einander entgegengesetzte Seitenschienen (38), eine obere Erdungssammelschiene (44) und eine untere Erdungssammelschiene (46) aufweist, die zwischen den Sammelschienen (38) angeordnet und mit ihnen verbunden sind, das Gehäuse ferner eine Mehrzahl von Einstecköffnungen (34) besitzt, die in der Längsrichtung des Gehäuses in Abständen voneinander angeordnet sind, ferner eine Mehrzahl von Sammelschienen (40) vorgesehen sind, die zwischen der oberen und der unteren Erdungssammelschiene (44, 46) gestapelt sind, und Isoliermittel (240, 242) für die Sammelschienen (40), wobei die Sammelschienen (40) eng geschichtet sind und einander entgegengesetzte Enden und zwischen diesen Enden eine Mehrzahl von Höckern (54) haben, die von Brückenteilen (58) gebildet werden und an Übergangsteile (56) angrenzen, und die Sammelschienen (40) zwischen den Einstecköffnungen (34) und den einander entgegengesetzten Enden gestapelt sind und an jeder der Einstecköffnungen (34) im Abstand voneinander angeordnet sind, um Abzweiganschlüsse zu ernöglichen, dadurch gekennzeichnet, daß an den einander entgegengesetzten Enden ein sich erweiternder Teil (48) vorgesehen ist und die einander entgegengesetzten Enden im Abstand voneinander angeordnet sind, um das Spleißen zu erleichtern, daß zu der Mehrzahl von Sammelschienen (40) Paare von Sammelschienen (40) gehören, die identisch geformt und zueinander spiegelbildlich angeordnet sind, und daß die Isoliermittel (240, 242) eine Mehrzahl von um jede Sammelschiene (40) herumgewickelten Isolierschläuchen umfassen, von denen jeder einander entgegengesetzte Enden hat, wobei einander entgegengesetzte Enden hat, wobei einander benachbarte Schläuche auf jeder Sammelschiene (40) an dem Brückenteil (58) der Sammelschiene (40) im Abstand voneinander angeordnet sind und sich über den benachbarten Übergangsteil (56) erstrecken, ferner Höckerisolierstreifen (240), die sich entlang je eines Höckerteils (54) jeder Sammelschiene auf dem oberen (45) und dem unteren Teil (47) in der Längsrichtung erstrecken, wobei die Schläuche mit Einkerbungen (234) ausgebildet sind, die über den Seitenrändern (244) der Übergangsteile (56) der Sammelschienen (40) liegt, und eine Mehrzahl von Höckerrandisolatoren, die die an den Einkerbungen (236) freiliegenden Ränder (244) der Sammelschienen (40) bedecken.

2. Steckbarer Schienenverteilerabschnitt (32) nach Anspruch 1, dadurch gekennzeichnet, daß jeder der Randisolatoren (242) allgemein U-förmig ist und eine gerundete Basis (246) und abstehende, elastische Schenkel (248) besitzt.

3. Steckbarer Schienenverteilerabschnitt (32) nach Anspruch 2, dadurch gekennzeichnet, daß jeder der Randisolatoren (242) so ausgebildet ist, daß er auf einen zugeordneten Rand der Sammelschienen (40) aufschiebbar ist.

4. Steckbarer Schienenverteilerabschnitt (32) nach Anspruch 1, dadurch gekennzeichnet, daß die Isolierschläuche zwischen zwei Schichten aus Polyethylenterephthalat eine Lage aus lackiertem Glasfasergewebe besitzen.

5. Steckbarer Schienenverteilerabschnitt (32) nach Anspruch 1, dadurch gekennzeichnet, daß der Randisolator (242) aus einem Polypropylenwerkstoff besteht.

6. Steckbarer Schienenverteilerabschnitt (32) nach einem der vorhergehenden Abschnitte, dadurch gekennzeichnet, daß jeder Höcker (54) vier Randisolatoren (242) besitzt, wobei einander diagonal entgegengesetzte Randisolatoren (242) austauschbar sind.

## Revendications

1. Une section de ligne omnibus enfichable (32) comportant des extrémités opposées adaptées pour une liaison par éclissage avec une section de ligne omnibus adjacente (32), ladite section de ligne omnibus enfichable (32) comprenant: un carter comportant une paire de barres latérales opposées (38), un bus de masse (44) de section supérieure et un bus de masse (46) de section inférieure reliés auxdites barres latérales (38) dans une zone intermédiaire desdites barres latérales (38), ledit carter comportant une pluralité d'ouvertures d'enfichage (34) situées longitudinalement sur la longueur dudit carter: une pluralité de barres omnibus (40) empilées entre lesdits bus de masse supérieur et inférieur (44, 46), et des moyens isolants (240, 242) pour lesdites barres omnibus (40), lesdites barres omnibus (40) étant étroitement serrées ensemble et comportant des extrémités opposées et une pluralité de saillies (54) composées de parties de pontage (38) et de parties de transition adjacentes (56) situées entre lesdites extrémités, lesdites barres omnibus (40) étant associées en relation d'empilage entre lesdites ouvertures d'enfichage (34) et lesdites extrémités opposées et étant agencées dans une relation d'espacement mutuel dans chacune desdites ouvertures d'enfichage (34) afin de faciliter l'établissement de connexions de prise à partir de celles-ci, caractérisée en ce que lesdites extrémités opposées comprennent une partie évasée (48) et sont disposées dans une relation d'espacement mutuel pour faciliter un raccordement par éclissage, ladite pluralité de barres omnibus (40) comprend des paires de barres omnibus (40) qui ont des formes identiques et qui sont positionnées symétriquement les unes par rapport aux autres, et lesdits moyens isolants (240, 242) comprenant une pluralité de tubes d'isolation qui sont enroulés autour de chaque barre omnibus (40), chaque tube comportant des extrémités opposées, des tubes adjacents sur chaque barre omnibus (40) étant mutuellement espacés dans la partie de pontage (58) de la barre omnibus (40) et s'étendant sur la partie de transition adjacente (56), des bandes isolatrices de saillies (240) s'étendant respectivement et longitudinalement le long de chaque partie en saillie (54) de chaque barre omnibus sur les parties supérieure (45) et inférieure (47), lesdits tubes étant pourvus de segments encochés (236) disposés en relation de recouvrement avec les bords latéraux (244) desdites parties de transition (56) desdites barres omnibus (40), et une pluralité d'isolateurs de bords de saillies (242) recouvrant les bords (244) desdites barres omnibus (40) exposés au travers desdits segments encochés (236).

2. Une section de ligne omnibus enfichable (32) telle que revendiquée dans la revendication 1, caractérisée en ce que chacun desdits isolateurs de bords (242) a dans l'ensemble une forme de U, avec une base arrondie (246) et des branches élastiques (248) en extension.

3. Une section de ligne omnibus enfichable (32) telle que revendiquée dans la revendication 2, caractérisée en ce que chaque isolateur de bord (242) est profilé de façon à être reçu sur un bord respectif desdites barres omnibus (40).

4. Une section de ligne omnibus enfichable (32) telle que revendiquée dans la revendication 1, caractérisée en ce que lesdits tubes isolants comprennent une couche de toile de verre vernie entre deux couches de terephtalate de polyéthylène.

5. Une section de ligne omnibus enfichable (32) telle que revendiquée dans la revendication 1, caractérisée en ce que ledit isolateur de bord (242) est formé d'un matériau à base de polypropylène.

6. Une section de ligne omnibus enfichable (32) telle que revendiquée dans une quelconque des revendications précédentes, caractérisée en ce que chaque saillie (54) porte quatre isolateurs de bords (242), des isolateurs de bords (242) opposés en diagonale étant interchangeables.

*FIG.I*

1

EP 0 194 304 B1

FIG. 2

FIG. 3

FIG. 4

FIG5

FIG. 6

FIG. 7

FIG. 8